# EUROPEAN PATENT SPECIFICATION

(11) **EP 1 981 346 B1**
(45) Date of publication and mention of the grant of the patent: **07.03.2012**
(21) Application number: 07709176.7
(22) Date of filing: 24.01.2007
(51) Int. Cl.: A21C 15/00, F25D 13/06

(54) **COOLING APPARATUS FOR COOLING DOUGH PRODUCTS AND METHOD FOR COOLING DOUGH PRODUCTS**
KÜHLVORRICHTUNG ZUM KÜHLEN VON TEIGPRODUKTEN UND VERFAHREN ZUM KÜHLEN VON TEIGPRODUKTEN
APPAREIL DE REFROIDISSEMENT DESTINE A REFROIDIR DES PRODUITS A BASE DE PÂTE ET PROCÉDÉ PERMETTANT DE REFROIDIR DES PRODUITS A BASE DE PÂTE

(30) Priority: 25.01.2006 NL 1030996
(43) Date of publication of application: 22.10.2008
(73) Proprietor: Conway Exploitatie en Beheer B.V., 3972 NE Driebergen-Rijsenburg (NL)
(72) Inventor: VAN CAPELLEVEEN, Pieter, NL-3921 CM Elst (NL)
(74) Representative: Hatzmann, Martin
(86) International application number: PCT/NL2007/050028
(87) International publication number: WO 2007/086741

(56) References cited:
- EP-A- 0 216 409
- EP-A- 0 565 098
- EP-A- 0 791 295
- EP-A- 0 954 973
- WO-A-01/33967
- AT-B- 397 183
- DE-A1- 10 214 837
- GB-A- 478 541
- GB-A- 1 098 784
- GB-A- 2 156 501
- US-A- 1 635 406
- US-A- 4 196 802
- US-A- 4 524 682
- US-A- 5 253 743
- US-A- 6 082 250

## Description

The invention relates to a cooling apparatus for cooling dough products, such as loaves of bread.

One such cooling apparatus is known from US 6,082,250, which discloses a device that has a channel through which a product can be moved. The product path is flanked by a pair of air channels which have openings opposite one another so that the air can pass from one air channel to the other transversely to the direction of displacement of the products in the product channel. The walls between the air channels and the product channels are bearing walls and preferably massive plates having the aforementioned openings. The lining or housing can have removable walls or doors which open to offer access to the air channels and the product channel for cleaning purposes.

EP 0,954,973 does not disclose a cooling apparatus, but a bread roll dough warming cabinet having a structure that, in some respects, is similar to a cooling apparatus. It includes a fermentation warmer cabinet with a dough feed, a fermentation section and a surrender unit for the risen unbaked bread rolls. The fermentation section has a sterilization unit which destroys mildew. The sterilization unit has a heating module which heats the fermentation section to a given temperature for a given time, the temperature being above that at which mildew spores can survive.

Other cooling apparatus are known from practice. In these known cooling apparatus, dough products such as, for instance, loaves of bread are passed on conveyor belts through a cooling space, while, when leaving the cooling space, the loaves of bread have cooled down to a temperature sufficiently low for packaging the loaves of bread. A drawback of such a cooling apparatus is that due to friction between the loaves and the conveyor belt, crumbs that can soil the cooling apparatus can be scraped from the loaves. Crumbs and dust can promote the formation of bacteria or chalk mold in the cooling apparatus and/or on the dough products, so that inter alia the storage life of the loaves can be affected. When the crumbs or other dust comes in direct contact with the loaves, bacteria or, for instance, chalk mold may lodge on these loaves. For reasons of hygiene and health, this is undesirable for the consumers of the loaves. Furthermore, bacteria or chalk mold reduce the storage life of the bread.

It is therefore an object of the invention to provide a cooling apparatus for dough products, such as, for instance, loaves of bread, wherein the cooling apparatus is designed both to prevent undesired formation of bacteria and/or mold, and to be capable of cooling large quantities of dough products per time unit, while dough products with varying sizes can be cooled.

To that end, the invention provides a cooling apparatus according to the type mentioned in the preamble of claim 1, wherein the cooling apparatus is provided with a cooling space with at least one carrier cabinet, the cooling apparatus being provided with a conveying system with carriers so that the carriers are conveyable through the cooling apparatus, while cooling means are present in the cooling space for cooling air, the conveying system comprising a forward path which carries dough products through the at least one carrier cabinet, wherein the conveying system comprises a return path, wherein the carriers are conveyable through the cooling apparatus in a closed circuit, wherein the cooling apparatus further comprises a disinfecting unit for disinfecting the cooling space, the disinfecting unit being provided with a disinfectant and a fan for spreading the disinfectant in the cooling space.

With such a closed circuit, the carriers remain within the cooling apparatus so that dust and other particles present outside the cooling apparatus cannot settle on the carriers. The dough products leaving the oven and then entering the cooling apparatus are at a temperature so high when they enter the cooling apparatus, that the chance of bacteria entering the cooling apparatus in this manner is minimal. In addition, no friction occurs between the carrier and the dough products so that, as a result, there is hardly any formation of crumbs. The cooling apparatus is equipped with a disinfection unit provided with a disinfectant and a fan for spreading the disinfectant in the cooling space. During down-time, when the manufacturing process of the dough products is at a standstill, or when only the cooling apparatus is inoperative, the disinfection unit ensures disinfection of the cooling space. To this end, the disinfecting unit is provided with a disinfectant and a fan for spreading the disinfectant in the cooling space. The disinfectant can for instance be liquid or gaseous. In this manner, a minimum amount of disinfectant can be used while still, a good spreading of the disinfectant through the cooling apparatus takes place. The fan can also be the system fan already present in the cooling system for circulating air in the cooling space. Thus, any formation of bacteria is combatted, which is particularly favourable to the storage life of the various dough products. Naturally, it is also possible that the disinfecting unit disinfects other areas of the cooling apparatus as well. It may also be possible that several disinfecting units are provided in the cooling apparatus, or that a disinfecting unit of the cooling apparatus can be used for disinfecting other areas of the baking apparatus, such as, for instance, the cutting machine, the packaging machine and the packaging space.

Therefore, the cooling apparatus according to the invention is hygienic and prevents formation of molds, bacteria and other undesired organisms to a large extent. Hence, optimal quality and storage life of the dough products can be guaranteed better.According to an alternative embodiment of the invention, adjacent an entrance opening of the cooling space, positioning means are provided for positioning dough products on a carrier. The dough products are conveyed in baking tins or on baking trays to the cooling apparatus. The positioning means remove the dough products from the baking tins ad/or baking trays and position the dough products on the carriers. It is particularly favourable when the positioning means are equipped in a manner such that they fill the carriers efficiently, to a maximum, without too many intermediate spaces, while air can still circulate along the dough products in order to facilitate a good heat exchange between the dough products and the cooler ambient air.

According to a further embodiment of the invention, at the exit opening, removing means can be provided for removing the dough products from the carriers. The carriers continue their way within the cooling apparatus via the return path and the dough products are conveyed further towards a cutting machine and/or a packaging machine. As the carriers are returned inside the cooling apparatus, via the return path, to the entrance opening, the carriers are not susceptible to soiling from outside.

According to another alternative embodiment of the invention, the carrier is designed as a wire grate. The advantage of a wire grate is that bread crumbs and other small particles fall through the grate so that they do not stick to the dough products, whereby such a carrier is particularly hygienic. These bread crumbs and other small particles could for instance be collected at the bottom of the cooling apparatus and be removed from the cooling space. In addition, a wire grate has the advantage that cold air can circulate optimally along the dough products, thus enabling a good heat transfer from the dough products to the surrounding air, so that the dough products cool down well. The dough products enter the cooling apparatus after the baking process, while the temperature of the dough products can be up to 110 °C. In order to package the products well, it is desirable that, when leaving the cooling apparatus, the dough products have a maximum temperature of approximately only 20 - 25 °C.

According to a further embodiment of the invention, the cooled air introduced into the cooling space may have undergone a filtering treatment. With it, any molds, bacteria and dust that may be present can be removed from the cooled air to be supplied to the cooling space. This too contributes to the hygiene and storage life of the dough products.

According to an alternative further embodiment of the invention, the cooling apparatus comprises a cleaning unit for cleaning the carriers. Should any parts still be stuck to the carrier, these will be removed by the cleaning unit. The cleaning unit could, for instance, clean only a few designated carriers, but also all passing carriers.

According to a further elaboration of the invention, the at least one carrier is designed for receiving dough products with a length of 1,80 meters. As a result, it is possible to manufacture and cool long loaves of bread especially suitable for manufacturing toast bread. When cutting the long loaf in portions of toast bread, only two heels are produced on a great number of loaves of toast breads. The heels are not suitable as toast bread and are removed. Through the provision of the possibility to manufacture and cool these long loaves, proportionally, more bread and less waste is produced. It is self-evident that a device with carriers intended for other lengths and/or widths falls within the framework of the invention as well.

The invention also relates to a method for cooling dough products, for instance loaves of bread, in a cooling apparatus provided with a cooling space with a conveying system, wherein dough products are conveyed on carriers through the cooling space in a forward path, while cooling means cool the air circulating around the dough products, wherein the conveying system moves the carriers, while the conveying system comprises a return path with which the carriers are conveyed in a closed circuit through the cooling apparatus, and wherein the cooling apparatus comprises a disinfecting unit provided with a disinfectant and a fan, which disinfects the cooling space when the cooling apparatus is inoperative by spreading the disinfectant in the cooling space using the fan.

With this method, effects are achieved that are similar to those mentioned hereinabove with the device for cooling dough products.

Further elaborations of the invention are described in the subclaims and will be further clarified in the following, with reference to the drawings.
Fig. 1 shows a top plan view of an exemplary embodiment of the cooling apparatus;
Fig. 2 shows a schematic side view of an exemplary embodiment of the cooling apparatus;
Fig. 3 shows a front view of an exemplary embodiment of a carrier cabinet;
Fig. 4 shows a right hand side view of a carrier cabinet; and
Fig. 5 shows a top plan view of a carrier cabinet.

In the different Figures, identical reference numerals indicate identical parts.

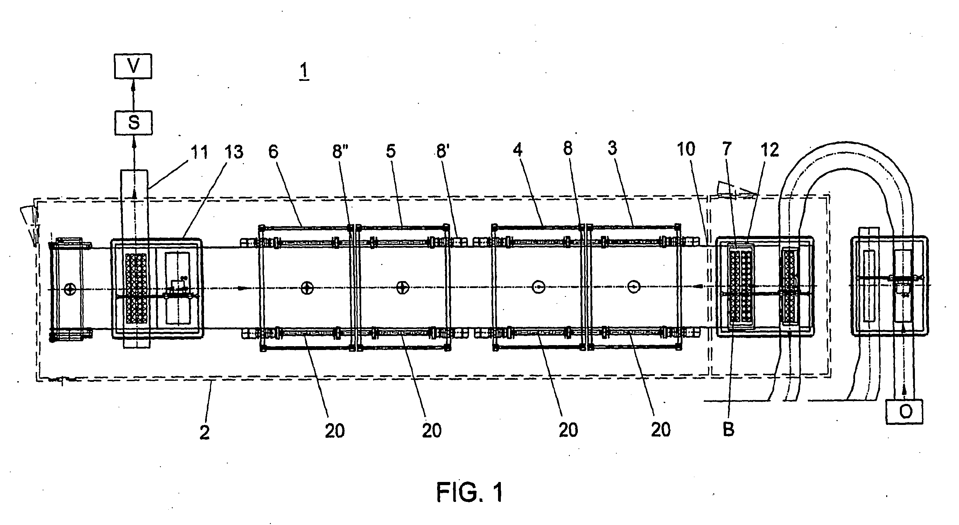

Fig. 1 shows a top plan view of a cooling apparatus 1 according to the invention. Such a cooling apparatus 1 can form part of a manufacturing apparatus for dough products B. That is why for instance one or more ovens O can be provided upstream of the cooling apparatus 1. Downstream of the cooling apparatus, a cutting machine S and a packaging machine V may be arranged.

The cooling apparatus 1 is provided with a cooling space 2 with at least one carrier cabinet 3, 4, 5, 6. In this exemplary embodiment, the cooling space comprises four carrier cabinets 3, 4, 5, 6. In a different exemplary embodiment, the cooling apparatus 1 can also comprise two carrier cabinets or more than four carrier cabinets. The cooling apparatus 1 is further provided with a conveying system T with carriers 7. The conveying system T ensures that the carriers are conveyable through the cooling apparatus. Further, cooling means 9 are present in the cooling space 2 for cooling the air, so that the dough products can transmit their warmth to this cooler air, whereby the temperature of the dough products B decreases. These cooling means 9 may be designed as heat exchangers. A system fan can be provided for circulating air in the cooling space and guiding the air to be cooled along the heat exchanger. Optionally, filters may be present for cleaning the air during the circulation thereof. Here, it is preferred that the cooled air undergoes a filtering treatment before being reintroduced into the cooling space.

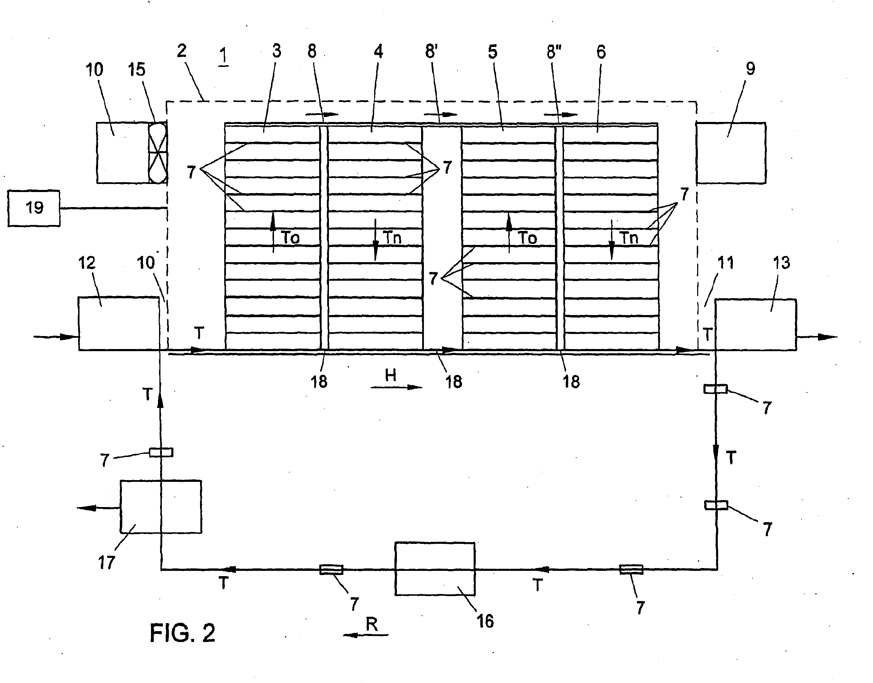

In Fig. 2 it can be clearly seen that the conveying system T comprises a forward path, which proceeds in the direction of the arrow H, and wherein this part of the path leads the carriers 7 through the at least one carrier cabinet 3, 4, 5, 6. The conveying system T further comprises a return path R, so that the carriers 7 are conveyed through the cooling apparatus 1 in a closed circuit. Hence, the carriers 7 are used only inside the cooling apparatus and not in other apparatus within the manufacturing apparatus of dough products B. It can also be clearly seen that the conveying system T conveys a large number of carriers 7 through the different carrier cabinets 3, 4, 5, 6. The separate carrier cabinets 3, 4, 5, 6 can comprise a large number of carriers 7 at the same time and hence, with those, a large number of dough products B can be cooled simultaneously.

The cooling space 2 is provided with an entrance opening 10 for introducing dough products B into the cooling space 2, and with an exit opening 11 for removing dough products B from the cooling space. After baking the dough products B, they are to be cooled in order for them to be packaged. As the cooling apparatus 1 comprises a closed cooling space 2, it is necessary that the dough products B can be introduced into the cooling apparatus 1 and be removed again. Preferably, these openings are no larger than required for introducing a carrier 7 with dough products B. Bread is lifted from the oven O (see Fig. 1) from the baking tin or from the baking tray via, for instance, positioning means 12, to then be positioned on a carrier 7. The carrier 7 is loaded in a manner such that it holds as many dough products as possible but that simultaneously, also, sufficient air can flow between the dough products to ensure a good heat exchange between the hot dough products B and the much cooler air.

At the exit opening 11 at the end of the cooling path, the forward path H of loaves of bread B, the loaves of bread B are taken from the carriers 7 by, for instance, removing means 13. Then, the loaves of bread B can travel through a following production step such as, for instance, cutting to the desired length in a cutting machine S and then wrapping the loaf in a packaging machine V.

The carriers 7 provided with loaves of bread B travel a path through the carrier cabinets 3, 4, 5, 6 in the cooling space 2 that depends on the type and the sizes of these loaves B. One sort of bread can, for instance, travel a longer path as it is carried through four step cabinets 3, 4, 5, 6, and a different sort of bread only through two step cabinets 3, 5 so that, for his last sort, the total cooling time is considerably shorter.

As can be clearly seen, the forward part H comprises at least one upward path To in a carrier cabinet 3, 5 and at least one downward path Tn in a following carrier cabinet 4, 6. Through the use of upward To and downward Tn paths, relatively many carriers 7 with many dough products B can be present in the cooling space 2 at the same time.

The cooling apparatus 1 further comprises, adjacent the upper side of the at least one carrier cabinet 3, 5, a transferring device 8, 8', 8", with the aid of which a carrier can be transferred from an upper position of a carrier cabinet 3, 5 with an upward path to an upper position of a carrier cabinet 4, 6 with a downward path. Through the use of such a transferring device 8, 8', 8", for each carrier 7, a route geared thereto through the carrier cabinets 3, 4, 5, 6 can be determined. For instance, a carrier 7 may need to be conveyed through the carrier cabinets less long. The carrier will travel an upward path To in carrier cabinet 3 and is then moved by the transferring devices 8, 8', 8" directly to a last carrier cabinet 6 where the downward path Tn moves the carrier 7 downward again so that the carrier can proceed towards the exit opening 11. The carrier may also use only the first two carrier cabinets 3, 4 or the last two carrier cabinets 5, 6.

Under the carrier cabinets 3, 4, 5, 6, a conveyor 18 can extend to the exit opening 11 of the cooling space 2 in a manner such that, if desired, a carrier 7 is directly conveyable from the entrance opening 10 to the exit opening 11. This may be very convenient when, for instance, dough products B require only very short cooling, or no cooling at all.

In a particularly advantageous embodiment, the cooling apparatus 1 is provided with a control 19 that adjusts the route of the carriers 7 through the cooling apparatus 1 depending on the type of dough product B or the sizes of the dough products. As a result, the carrier 7 can travel the different routes as described hereinabove. It is important that the routes of the different carriers are adjusted well, as it is important that the hot dough products B with a temperature of about 110°C cool down sufficiently, to approximately 20 °C. The fact is that too high a temperature upon packaging can lead to formation of condensation in the package so that the dough product B can become soft.

After the loaves of bread B have been removed from the carriers 7, the carriers 7 continue their route and are conveyed back via the return path R to the entrance opening 11, where new loaves or other dough products B, such as, for instance, cakes or buns, are positioned by the positioning means 12 on the carriers 7.

The cooling apparatus 1 is further provided with a disinfecting unit 14 for disinfecting, for instance, the cooling space 2. This disinfecting unit 14 can be used when the cooling apparatus 1 is not in use. With the aid of the fan 15, a disinfectant, which may be liquid or gaseous, is spread through the cooling space 2 in order to exterminate undesired organisms, such as bacteria and molds. This enhances the quality and the storage life of the dough products B. The fan 15 can also be the system fan for circulating the air in the cooling space 2.

It may be so that several disinfecting units 14 are provided, or that the disinfecting unit 14 is mobile, so that it can be deployed for various areas in the entire manufacturing apparatus for dough products B.

On the return path R, a cleaning unit 16 can be arranged for cleaning the carriers 7 just used. Any soil or dough product particles that may be present are removed so that a clean carrier 7 is available at the entrance opening 10 for receiving new, freshly baked, hot dough products B.

The return path R can further also comprise a carrier exchange station 17. During use of the cooling apparatus 1, this carrier exchange station 17 enables removal or replacement of any defect carriers 7 by other carriers 7. A carrier 7 leaving the cleaning unit 16 insufficiently clean can also be removed.

A carrier 7 can be suitable for receiving dough products B with a length of 1,80 meters. Several of these dough products B can be positioned side by side on the carrier 7. The carrier 7 can for instance be a wire grate, which enables crumbs and other particles to fall through the carrier 7. These can be collected in, for instance, a collecting tray (not shown) at the bottom of the cooling space 2.

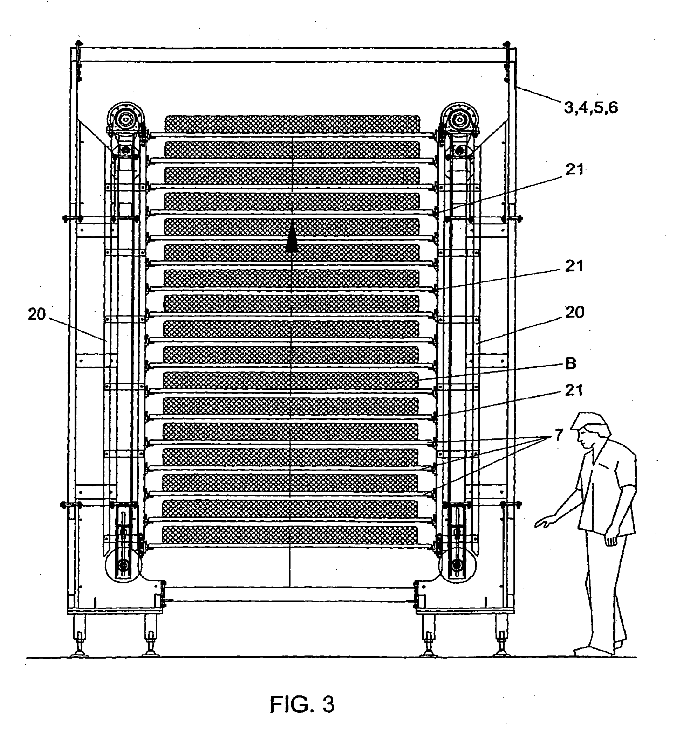

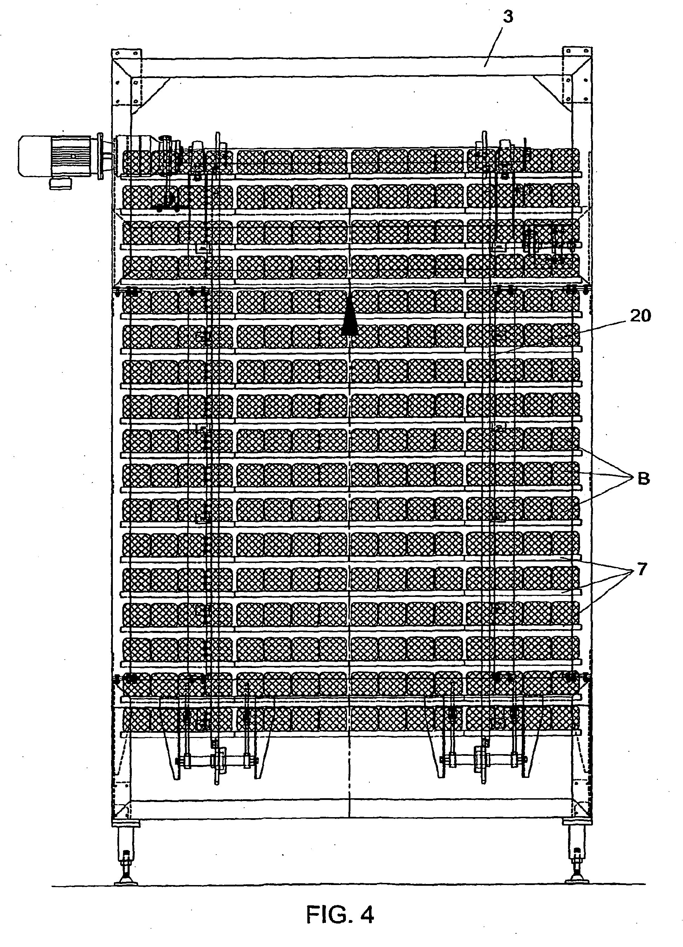

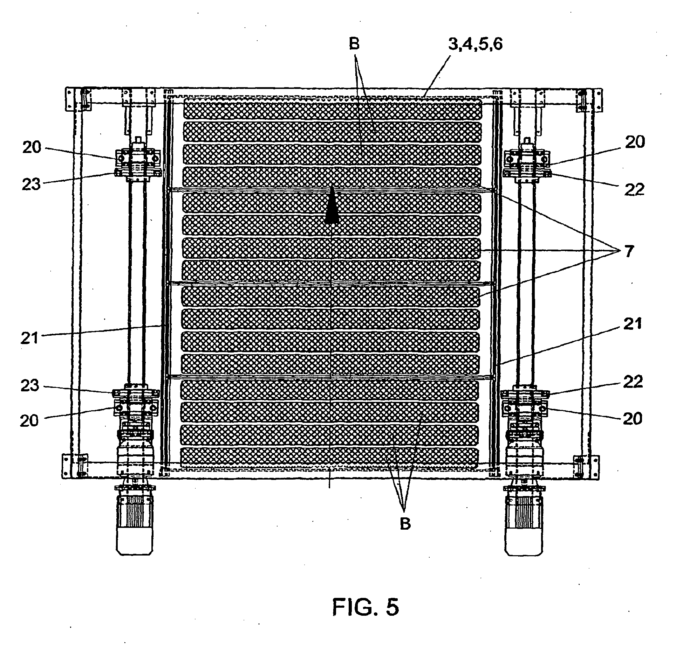

In Figs. 3 - 5, views of a carrier cabinet 3, 4, 5, 6 as used in the cooling apparatus 1 according to the invention are shown. The height of such a carrier cabinet 3, 4, 5, 6 can be, for instance, 7 meters. The carrier cabinet 3, 4, 5, 6 is provided with a chain conveyor 20 with carrier guides 21. The chain conveyors 20 are drivable in a stepwise manner. In the periods of standstill between the steps, the carriers can be introduced into the carrier cabinet and be removed from the carrier cabinets. Furthermore, the carrier can be moved, in the periods of standstill, with the aid of the transferring devices 8, 8', 8", from an upward path to a downward path or vice versa. The carrier guides 21 are designed for receiving several carriers 7. In the carrier cabinet 3, 4, 5, 6 therefore, there are a number of carriers 7 at the same height. In Fig. 3, an upward path is shown. However, the chain conveyor 20 can also be designed for providing a downward path. In Fig. 5 it can be seen that each chain conveyor 20 comprises two conveying chains 22, 23 on which the carrier guides are fitted in an easily detachable manner.

It is clear that the invention is not limited to the exemplary embodiment described but that various modifications within the framework of the invention as defined by the claims are possible. Naturally, the cooling apparatus according to the invention can be used for cooling all sorts of dough products such as, for instance, French bread, cakes, currant loaves, buns etc. It is also self-evident to the skilled person that a cleaning unit and a carrier exchange station can be provided at a random place in the conveying system between the exit opening and the entrance opening of the cooling space. The disinfecting unit may also be arranged at different locations in the cooling apparatus.

## Claims

1. A cooling apparatus (1) for cooling dough products (B), for instance loaves of bread, provided with a cooling space (2) with at least one carrier cabinet (3,4,5,6), wherein the cooling apparatus is provided with a conveying system (T) with carriers (7) so that the carriers are conveyable through the cooling apparatus (1), while cooling means (9) are present in the cooling space (2) for cooling air, the conveying system (T) comprising a forward path (H) which carries dough products through the at least one carrier cabinet (3,4,5,6), wherein the conveying system comprises a return path (R), wherein the carriers (7) are conveyable through the cooling apparatus (1) in a closed circuit, **characterized in that** the cooling apparatus further comprises a disinfecting unit (14) for disinfecting the cooling space (2), the disinfecting unit being provided with a disinfectant and a fan (15) for spreading the disinfectant in the cooling space (2).

2. A cooling apparatus according to claim 1, wherein the cooling space (1) is provided with an entrance opening (10) for introducing dough products (B) into the cooling space (2) and with an exit opening (11) for removing the dough products from the cooling space.

3. A cooling apparatus according to any one of claim 1 or 2, wherein adjacent an entrance opening (10) of the cooling space (2), positioning means (12) are provided for positioning dough products (B) on a carrier (7).

4. A cooling apparatus according to any one of the preceding claims, wherein adjacent an exit opening (11) of the cooling apparatus (2), removing means (13) are provided for removing dough products (B) from the carriers (7).

5. A cooling apparatus according to any one of the preceding claims, wherein the carrier (7) is designed as a wire grate.

6. A cooling apparatus according to any one of the preceding claims, wherein the cooling apparatus (1) comprises a cleaning unit (16), for cleaning the carriers (7).

7. A cooling apparatus according to any one of the preceding claims, wherein the cooling means (9) are heat exchangers.

8. A cooling apparatus according to any one of the preceding claims, wherein the cooling apparatus (1) comprises a carrier exchange station (17), preferably provided in the return conveying path (R).

9. A cooling apparatus according to any one of the preceding claims, wherein the at least one carrier (7) is designed for receiving dough products (B) of 1.80 meters.

10. A cooling apparatus according to any one of the preceding claims, wherein the forward conveying path (H) comprises at least one upward path (To) in a carrier cabinet (3, 5) and at least one downward path (Tn) in a following carrier cabinet (4, 6).

11. A cooling apparatus according to any one of the preceding claims, wherein the at least one carrier cabinet (3, 4, 5, 6) is provided with a chain conveyor (20) with carrier guides (21).

12. A cooling apparatus according to claim 11, wherein the chain conveyors (20) are drivable in a stepwise manner.

13. A cooling apparatus according to any one of the preceding claims, wherein the carrier guides (21) are designed for receiving several carriers (7).

14. A cooling apparatus according to any one of the preceding claims, wherein, adjacent an upper side of the at least one carrier cabinet (3, 4, 5, 6), the cooling apparatus (1) comprises a transferring device (8) with the aid of which a carrier can be transferred from an upper position of a carrier cabinet (3, 5) with an upward path (To) to an upper position of a carrier cabinet (4, 6) with a downward path (Tn).

15. A cooling apparatus according to any one of the preceding claims, wherein each chain conveyor (20) comprises two conveying chains (22, 23) on which the carrier guides (21) are fitted in an easily detachable manner.

16. A cooling apparatus according to any one of the preceding claims, wherein a conveyor (18) extends under the carrier cabinets (3, 4, 5, 6) to the exit opening (11) of the cooling space (2), such that, if desired, a carrier (7) is conveyable from the entrance opening (10) directly to the exit opening (11).

17. A cooling apparatus according to any one of the preceding claims, wherein this is provided with a control (19) which adjusts the route of the carriers (7) through the cooling apparatus (1) depending on the type of dough product (B) or the dimensions of the dough products.

18. A cooling apparatus according to any one of the preceding claims, wherein the cooling apparatus (1) is provided with a filter for filtering air to be introduced into or to be circulated in the cooling apparatus.

19. A method for cooling dough products (B), for instance loaves of bread, in a cooling apparatus (1) provided with a cooling space (2) with a conveying system (T), wherein dough products are conveyed on carriers (7) through the cooling space (2) in a forward path (H), while cooling means (9) cool the air circulating around the dough products, wherein the conveying system (T) moves the carriers (7), wherein the conveying system (T) comprises a return path (H), wherein the carriers (7) are conveyed through the cooling apparatus (1) in a closed circuit, **characterized in that** the cooling apparatus (1) comprises a disinfecting unit (14) provided with a disinfectant and a fan (15), which disinfects the cooling space (2) when the cooling apparatus (1) is inoperative by spreading the disinfectant in the cooling space using the fan (15).

20. A method according to claim 19, wherein, at an entrance opening (10) of the cooling space (2), dough products (B) are positioned on a carrier (7) with the aid of positioning means (12).

21. A method according to any one of claims 19 - 20, wherein, at an exit opening (11) of the cooling space (2), dough products (B) are removed from a carrier (7) with the aid of removing means (13).

22. A method according to any one of claims 19 - 21, wherein the carrier (7) is a wire grate.

23. A method according to any one of claims 19 - 22, wherein the cooling apparatus (1) comprises a cleaning unit (16) that cleans the carriers (7) from which the dough products (B) have been removed.

24. A method according to any one of claims 19 - 23, wherein the cooling apparatus (1) comprises a carrier exchange station (17), which removes or exchanges carriers (7) from the conveying system (T).

25. A method according to any one of claims 19 - 24, wherein the forward conveying path (H) comprises at least one upward path (To) in a carrier cabinet (3, 5) and at least one downward path (Tn) in a following carrier cabinet (4, 6), while the carriers (7) are conveyed over these paths by the conveying system (T).

26. A method according to any one of claims 19 - 25, wherein, adjacent an upper side of the at least one carrier cabinet (3, 5), the cooling apparatus (1) comprises a transferring device (8) with the aid of which a carrier (7) is transferred from an upper position of a carrier cabinet (3, 5) with an upward path (To) to an upper position of a carrier cabinet (4, 6) with a downward path (Tn).

27. A method according to any one of claims 19 - 26, wherein air to be introduced into or to be circulated in the cooling space (1) is filtered.

## Patentansprüche

1. Kühlvorrichtung (1) zum Kühlen von Teigprodukten (B), z.B. Laibern von Brot, mit einem Kühlraum (2) mit mindestens einem Trägergehäuse (3,4,5,6), wobei die Kühlvorrichtung mit einem Fördersystem (T) mit Trägern (7) versehen ist, derart, dass die Träger durch die Kühlvorrichtung (1) hindurch förderbar sind, während in dem Kühlraum (2) Kühlmittel (9) zum Kühlen von Luft vorhanden sind, wobei das Fördersystem (T) einen Vorwärtsförderweg (H) aufweist, der Teigprodukte durch das mindestens eine Trägergehäuse (3,4,5,6) transportiert, und wobei das Fördersystem einen Rückförderweg (R) aufweist, wobei die Träger (7) in einem geschlossenen Kreislauf durch die Kühlvorrichtung (1) hindurch förderbar sind,
**dadurch gekennzeichnet, dass** die Kühlvorrichtung ferner eine Desinfektionseinheit (14) zum Desinfizieren des Kühlraums (2) aufweist, wobei die Desinfektionseinheit mit einem Desinfektionsmittel und einem Ventilator (15) zum Verteilen des Desinfektionsmittels in dem Kühlraum (2) versehen ist.

2. Kühlvorrichtung nach Anspruch 1, bei der der Kühlraum (1) mit einer Eintrittsöffnung (10) zum Einführen von Teigprodukten (B) in den Kühlraum (2) und mit einer Austrittsöffnung (11) zum Entnehmen der Teigprodukte aus dem Kühlraum versehen ist.

3. Kühlvorrichtung nach einem der Ansprüche 1 oder 2, bei der nahe einer Eintrittsöffnung (10) des Kühlraums (2) Positionierungsvorrichtungen (12) vorgesehen sind, um Teigprodukte (B) auf einem Träger (7) zu positionieren.

4. Kühlvorrichtung nach einem der vorhergehenden Ansprüche, bei der nahe einer Austrittsöffnung (11) des Kühlraums (2) Entnahmevorrichtungen (13) zum Entnehmen von Teigprodukten (B) aus den Trägern (7) vorgesehen sind.

5. Kühlvorrichtung nach einem der vorhergehenden Ansprüche, bei der der Träger (7) als Drahtrost ausgebildet ist.

6. Kühlvorrichtung nach einem der vorhergehenden Ansprüche, bei der die Kühlvorrichtung (1) eine Reinigungseinheit (16) zum Reinigen der Träger (7) aufweist.

7. Kühlvorrichtung nach einem der vorhergehenden Ansprüche, bei der die Kühlmittel (9) Wärmetauscher sind.

8. Kühlvorrichtung nach einem der vorhergehenden Ansprüche, bei der die Kühlvorrichtung (1) eine Trägeraustauschstation (17) aufweist, die vorzugsweise in dem Rückförderweg (R) angeordnet ist.

9. Kühlvorrichtung nach einem der vorhergehenden Ansprüche, bei der der mindestens eine Träger (7) zur Aufnahme von Teigprodukten (B) von 1,80 Metern ausgebildet ist.

10. Kühlvorrichtung nach einem der vorhergehenden Ansprüche, bei der der Vorwärtsförderweg (H) mindestens einen Aufwärtsweg (To) in einem Trägergehäuse (3,5) und mindestens einen Abwärtsweg (Tn) in einem folgenden Trägergehäuse (4,6) aufweist.

11. Kühlvorrichtung nach einem der vorhergehenden Ansprüche, bei der das mindestens eine Trägergehäuse (3,4,5,6) mit einem Kettenförderer (20) mit Trägerführungen (21) versehen ist.

12. Kühlvorrichtung nach Anspruch 11, bei der die Kettenförderer (20) schrittweise antreibbar sind.

13. Kühlvorrichtung nach einem der vorhergehenden Ansprüche, bei der die Trägerführungen (21) zum Fördern mehrerer Träger (7) ausgebildet sind.

14. Kühlvorrichtung nach einem der vorhergehenden Ansprüche, bei der nahe einer oberen Seite des mindestens einen Trägergehäuses (3,4,5, 6) die Kühlvorrichtung (1) eine Transfervorrichtung (8) aufweist, mit deren Hilfe ein Träger aus einer oberen Position eines Trägergehäuses (3,5) mit einem Aufwärtsweg (To) zu einer oberen Position eines Trägergehäuses (4,6) mit einem Abwärtsweg (Tn) transferiert werden kann.

15. Kühlvorrichtung nach einem der vorhergehenden Ansprüche, bei der jeder Kettenförderer (20) zwei Förderketten (22,23) aufweist, an denen die Trägerführungen (21) leicht abnehmbar befestigt sind.

16. Kühlvorrichtung nach einem der vorhergehenden Ansprüche, bei der sich ein Förderer (18) unter den Trägergehäusen (3,4,5,6) derart zu der Austrittsöffnung (11) des Kühlraums (2) erstreckt, dass bei Bedarf ein Träger (7) von der Eintrittsöffnung (10) direkt zu der Austrittsöffnung (11) förderbar ist.

17. Kühlvorrichtung nach einem der vorhergehenden Ansprüche, versehen mit einer Steuerung (19), die die Route der Träger (7) durch die Kühlvorrichtung (1) hindurch in Abhängigkeit von dem Typ des Teigprodukts (B) oder den Bemessungen der Teigprodukte anpasst.

18. Kühlvorrichtung nach einem der vorhergehenden Ansprüche, wobei die Kühlvorrichtung (1) mit einem Filter zum Filtern der Luft versehen ist, die in die Kühlvorrichtung eingeführt oder zirkulierend in dieser bewegt werden soll.

19. Verfahren zum Kühlen von Teigprodukten (B), z.B. Laibern von Brot, in einer Kühlvorrichtung (1), die einen Kühlraum (2) mit einem Fördersystem (T) aufweist, wobei Teigprodukte auf Trägern (7) durch den Kühlraum (2) hindurch in einem Vorwärtsförderweg (H) gefördert werden, während Kühlmittel (9) die um die Teigprodukte zirkulierende Luft kühlen, wobei das Fördersystem (T) die Träger (7) bewegt, wobei das Fördersystem (T) einen Rückförderweg (R) aufweist, wobei die Träger (7) in einem geschlossenen Kreislauf durch die Kühlvorrichtung (1) hindurch gefördert werden,
**dadurch gekennzeichnet, dass** die Kühlvorrichtung (1) eine mit einem Desinfektionsmittel und einem Ventilator (15) versehene Desinfektionseinheit (14) aufweist, die während eines betriebslosen Zustands der Kühlvorrichtung (1) den Kühlraum (2) desinfiziert, indem sie das Desinfektionsmittel mittels des Ventilators (15) in dem Kühlraum verteilt.

20. Verfahren nach Anspruch 19, bei dem an einer Eintrittsöffnung (10) des Kühlraums (2) Teigprodukte (B) mittels Positionierungsvorrichtungen (12) auf einem Träger (7) positioniert werden.

21. Verfahren nach einem der Ansprüche 19 - 20, bei dem an einer Austrittsöffnung (1) des Kühlraums (2) Teigprodukte (B) mittels Entnahmevorrichtungen (13) einem Träger (7) entnommen werden.

22. Verfahren nach einem der Ansprüche 19 - 21, bei dem der Träger (7) ein Drahtrost ist.

23. Verfahren nach einem der Ansprüche 19 - 22, bei dem die Kühlvorrichtung (1) eine Reinigungseinheit (16) aufweist, welche die Träger (7) reinigt, denen die Teigprodukte (B) entnommen worden sind.

24. Verfahren nach einem der Ansprüche 19 - 23, bei dem die Kühlvorrichtung (1) eine Trägeraustauschstation (17) aufweist, die dem Fördersystem (T) Träger (7) entnimmt oder diese austauscht.

25. Verfahren nach einem der Ansprüche 19 - 24, bei dem der Vorwärtsförderweg (H) mindestens einen Aufwärtsweg (To) in einem Trägergehäuse (3,5) und mindestens einen Abwärtsweg (Tn) in einem folgenden Trägergehäuse (4,6) aufweist, wobei die Träger (7) mittels des Fördersystems (T) über diese Wege gefördert werden.

26. Verfahren nach einem der Ansprüche 19 - 25, bei dem nahe einer oberen Seite des mindestens einen Trägergehäuses (3,5) die Kühlvorrichtung (1) eine Transfervorrichtung (8) aufweist, mit deren Hilfe ein Träger (7) aus einer oberen Position eines Trägergehäuses (3,5) mit einem Aufwärtsweg (To) zu einer oberen Position eines Trägergehäuses (4,6) mit einem Abwärtsweg (Tn) transferiert werden kann.

27. Verfahren nach einem der Ansprüche 19 - 26, bei dem die Luft, die in den Kühlraum (1) eingeführt oder zirkulierend in diesem bewegt werden soll, gefiltert wird.

## Revendications

1. Appareil de refroidissement (1) pour refroidir des produits à base de pâte (B), par exemple des pains, pourvu d'un espace de refroidissement (2) avec au moins une armoire à transporteurs (3, 4, 5, 6), dans lequel l'appareil de refroidissement est pourvu d'un système convoyeur (T) avec des transporteurs (7) de manière à ce que les transporteurs puissent être convoyés à travers l'appareil de refroidissement (1), alors que des moyens de refroidissement (9) sont présents dans l'espace de refroidissement (2) pour refroidir l'air, le système convoyeur (T) comprenant un trajet vers l'avant (H) qui transporte des produits à base de pâte à travers l'au moins une armoire à transporteurs (3, 4, 5, 6), dans lequel le système convoyeur comprend un trajet de retour (R), dans lequel les transporteurs (7) peuvent être convoyés à travers l'appareil de refroidissement (1) dans un circuit fermé, **caractérisé en ce que** l'appareil de refroidissement comprend en outre une unité désinfectante (14) pour désinfecter l'espace de refroidissement (2), l'unité désinfectante étant pourvue d'un désinfectant et d'un ventilateur (15) pour répartir le désinfectant dans l'espace de refroidissement (2).

2. Appareil de refroidissement selon la revendication 1, dans lequel l'espace de refroidissement (1) est pourvu d'une ouverture d'entrée (10) pour introduire des produits à base de pâte (B) dans l'espace de refroidissement (2) et d'une ouverture de sortie (11) pour retirer les produits à base de pâte de l'espace de refroidissement.

3. Appareil de refroidissement selon l'une quelconque des revendications 1 et 2, dans lequel, de façon adjacente à une ouverture d'entrée (10) de l'espace de refroidissement (2), des moyens de positionnement (12) sont disposés pour positionner des produits à base de pâte (B) sur un transporteur (7).

4. Appareil de refroidissement selon l'une quelconque des revendications précédentes, dans lequel, de façon adjacente à une ouverture de sortie (11) de l'appareil de refroidissement (2), des moyens de retrait (13) sont disposés pour retirer des produits à base de pâte (B) des transporteurs (7).

5. Appareil de refroidissement selon l'une quelconque des revendications précédentes, dans lequel le transporteur (7) est conçu sous forme de grille métallique.

6. Appareil de refroidissement selon l'une quelconque des revendications précédentes, dans lequel l'appareil de refroidissement (1) comprend une unité de nettoyage (16), pour nettoyer les transporteurs (7).

7. Appareil de refroidissement selon l'une quelconque des revendications précédentes, dans lequel les moyens de refroidissement (9) sont des échangeurs de chaleur.

8. Appareil de refroidissement selon l'une quelconque des revendications précédentes, dans lequel l'appareil de refroidissement (1) comprend un poste d'échange de transporteurs (17), de préférence disposé dans le trajet de retour convoyeur (R).

9. Appareil de refroidissement selon l'une quelconque des revendications précédentes, dans lequel l'au moins un transporteur (7) est conçu pour recevoir des produits à base de pâte (B) d'1,80 mètre.

10. Appareil de refroidissement selon l'une quelconque des revendications précédentes, dans lequel le trajet de convoyage vers l'avant (H) comprend au moins un trajet ascendant (To) dans une armoire à transporteurs (3, 5) et au moins un trajet descendant (Tn) dans une armoire à transporteurs suivante (4, 6).

11. Appareil de refroidissement selon l'une quelconque des revendications précédentes, dans lequel l'au moins une armoire à transporteurs (3, 4, 5, 6) est pourvue d'un convoyeur à chaîne (20) avec des guides de transporteurs (21).

12. Appareil de refroidissement selon la revendication 11, dans lequel les convoyeurs à chaîne (20) peuvent être entraînés progressivement.

13. Appareil de refroidissement selon l'une quelconque des revendications précédentes, dans lequel les guides de transporteurs (21) sont conçus pour recevoir plusieurs transporteurs (7).

14. Appareil de refroidissement selon l'une quelconque des revendications précédentes, dans lequel, de façon adjacente à un côté supérieur de l'au moins une armoire à transporteurs (3, 4, 5, 6), l'appareil de refroidissement (1) comprend un dispositif de transfert (8) à l'aide duquel un transporteur peut être transféré d'une position supérieure d'une armoire à transporteurs (3, 5) avec un trajet ascendant (To) à une position supérieure d'une armoire à transporteurs (4, 6) avec un trajet descendant (Tn).

15. Appareil de refroidissement selon l'une quelconque des revendications précédentes, dans lequel chaque convoyeur à chaîne (20) comprend deux chaînes convoyeuses (22, 23) sur lesquelles les guides de transporteurs (21) sont installés de manière facilement amovible.

16. Appareil de refroidissement selon l'une quelconque des revendications précédentes, dans lequel un convoyeur (18) s'étend sous les armoires à transporteurs (3, 4, 5, 6) jusqu'à l'ouverture de sortie (11) de l'espace de refroidissement (2), de sorte que, en cas de besoin, un transporteur (7) puisse être convoyé à partir de l'ouverture d'entrée (10) directement jusqu'à l'ouverture de sortie (11).

17. Appareil de refroidissement selon l'une quelconque des revendications précédentes, dans lequel il est pourvu d'une commande (19) qui adapte la trajectoire des transporteurs (7) à travers l'appareil de refroidissement (1) en fonction du type de produit à base de pâte (B) ou des dimensions des produits à base de pâte.

18. Appareil de refroidissement selon l'une quelconque des revendications précédentes, dans lequel l'appareil de refroidissement (1) est pourvu d'un filtre pour filtrer l'air destiné à être introduit ou à circuler dans l'appareil de refroidissement.

19. Méthode pour refroidir des produits à base de pâte (B), par exemple des pains, dans un appareil de refroidissement (1) pourvu d'un espace de refroidissement (2) avec un système convoyeur (T), dans laquelle des produits à base de pâte sont convoyés sur des transporteurs (7) à travers l'espace de refroidissement (2) dans un trajet vers l'avant (H), alors que des moyens de refroidissement (9) refroidissent l'air circulant autour des produits à base de pâte, dans laquelle le système convoyeur (T) déplace les transporteurs (7), dans laquelle le système convoyeur (T) comprend un trajet de retour (H), dans laquelle les transporteurs (7) sont convoyés à travers l'appareil de refroidissement (1) dans un circuit fermé, **caractérisée en ce que** l'appareil de refroidissement (1) comprend une unité désinfectante (14), pourvue d'un désinfectant et d'un ventilateur (15), qui désinfecte l'espace de refroidissement (2) lorsque l'appareil de refroidissement (1) ne fonctionne pas en répartissant le désinfectant dans l'espace de refroidissement au moyen du ventilateur (15).

20. Méthode selon la revendication 19, dans laquelle, à une ouverture d'entrée (10) de l'espace de refroidissement (2), des produits à base de pâte (B) sont positionnés sur un transporteur (7) à l'aide de moyens de positionnement (12).

21. Méthode selon l'une quelconque des revendications 19 à 20, dans laquelle, à une ouverture de sortie (11) de l'espace de refroidissement (2), des produits à base de pâte (B) sont retirés d'un transporteur (7) à l'aide de moyens de retrait (13).

22. Méthode selon l'une quelconque des revendications 19 à 21, dans laquelle le transporteur (7) est une grille métallique.

23. Méthode selon l'une quelconque des revendications 19 à 22, dans laquelle l'appareil de refroidissement (1) comprend une unité de nettoyage (16) qui nettoie les transporteurs (7) dont les produits à base de pâte (B) ont été retirés.

24. Méthode selon l'une quelconque des revendications 19 à 23, dans laquelle l'appareil de refroidissement (1) comprend un poste d'échange de transporteurs (17), qui retire ou échange des transporteurs (7) du système convoyeur (T).

25. Méthode selon l'une quelconque des revendications 19 à 24, dans laquelle le trajet de convoyage vers l'avant (H) comprend au moins un trajet ascendant (To) dans une armoire à transporteurs (3, 5) et au moins un trajet descendant (Tn) dans une armoire à transporteurs suivante (4, 6), alors que les transporteurs (7) sont convoyés sur ces trajets par le système convoyeur (T).

26. Méthode selon l'une quelconque des revendications 19 à 25, dans laquelle, de façon adjacente à un côté supérieur de l'au moins une armoire à transporteurs (3, 5), l'appareil de refroidissement (1) comprend un dispositif de transfert (8) à l'aide duquel un transporteur (7) est transféré d'une position supérieure d'une armoire à transporteurs (3, 5) avec un trajet ascendant (To) à une position supérieure d'une armoire à transporteurs (4, 6) avec un trajet descendant (Tn).

27. Méthode selon l'une quelconque des revendications 19 à 26, dans laquelle de l'air destiné à être introduit ou à circuler dans l'espace de refroidissement (1) est filtré.
